# EUROPEAN PATENT SPECIFICATION

(11) **EP 0 284 075 B1**
(45) Date of publication and mention of the grant of the patent: **20.12.1995**
(21) Application number: 88104767.4
(22) Date of filing: 24.03.1988
(51) Int. Cl.: G01S 13/42, G01S 7/02, B64G 1/00

(54) **Radar system consisting of an array of interconnected elementary satellites**
Radarsystem mit einer Gruppe von untereinander verbundenen Elementar-Satelliten
Système radar constitué par un réseau de satellites élémentaires interconnectés

(30) Priority: 26.03.1987 IT 4777287
(43) Date of publication of application: 28.09.1988
(73) Proprietor: SELENIA SPAZIO S.p.A., I-67100 L'Aquila (IT)
(72) Inventor: Galati, Gaspare, I-00162 Roma (IT); Lo Squadro, Giacinto, I-00155 Roma (IT)
(74) Representative: Gustorf, Gerhard, Dipl.-Ing.

(56) References cited:
- GB-A- 2 134 353
- US-A- 3 678 387
- US-A- 4 163 235
- PROCEEDINGS OF IGARSS SYMPOSIUM, Zürich, 8th-11th September 1986, pages 697-701, Paris, FR; M.S. KAPLAN: "Application of spaceborne distributed aperture/coherent array processing (SDA/CAP) technology to active and passive microwave remote sensing"
- IEEE TRANSACTIONS ON AEROSPACE AND ELECTRONIC SYSTEMS, vol. AES-19, no. 6,November 1983, pages 831-839, New York, US; R.C. HEIMILLER et al.: "Distributed array radar"

## Description

The present invention relates to a radar system for primary surveillance of an airspace as set forth in the preamble of claim 1.

Such a distributed array radar system (DAR) is known by IEEE Transactions on Aerospace and Electronic systems, vol. AES-19, no. 6, Nov. 1983, pp 831-839 (4). The general concept of this radar is described which has a certain number of transmitting and of receiving units. The basic radar equation is interpreted, i.e. the signal/noise ratio of the DAR, but there is no hint as how to guarantee the coherence of the DAR.

In "Proceedings of IGARSS Symposium", Zürich, 8-11 Sept. 1986, pp 697 - 701, Kaplan decribes the application of a spaceborne distributed aperture/coherent array processing (SDA/CAP) technology to active and passive microwave remote sensing. Nothing is to be found how to guarantee the geometry of the system.

This invention belongs to the field of primary and secondary surveillance radars which are meant to detect mobile targets (such as aircraft), measures their present position, predict their future position and finally, as far as possible, identify them. It is a well known fact that radar surveillance is applied to the civil (e.g. as an Air Traffic Aid) and military field (e.g. defence of the airspace).

The coverage of a ground based surveillance system is limited by the horizon and by orographic constraints, particularly at relatively low altitude; a spaceborn system, by utilising artificial satellites, is not affected by such limitations and can cover a very large area and distribute surveillance data to many users.

The main functional and operating characteristics of airspace radar surveillance, to date at an early definition stage, are highlighted in a few recent publications, such as:
(1) W. J. Caime "Space-based radar application to Air Traffic Control", IEEE Internal. Radar Conference, Arlington, May 6-9, 1985 (IEEE Cat No 85 CH 2076-8), pp 312-321.
[2] E. Brookner: "Derivation of a satellite radar architecture for air surveillance", IEEE Eascon - 1983 (IEEE Cat. No. 0531-6863/83), pp 465-475.
[3] G. Galati, G. Losquadro "Space-based multifunction radar systems: future tool for civilian and military surveillance 42nd Symposium of the Guidance & Control Panel of the AGARD, Bruxelles, 10-13 June 1986, pp 31.1-31.9.

As highlighted in article |3| above, radar surveillance systems may use the primary, the secondary, or both, radars.

The characteristics and operation of the primary & secondary radar, which are standard systems used by the International Civil Aviation, are well known to the relevant experts and operators.

Space borne surveillance cannot be performed by simply carrying present techniques and technologies of primary and secondary radars on board artificial satellites because of two types of problems, both due to the very large distance (in the order of thousands of kilometers) between the radar antenna and the targets to be detected.

The first problem is that of the power required to be transmitted, particularly high for the primary radar, because the product of the square of the antenna effective area and power transmitted is proportional to the fourth power of range.

Therefore the need arises for a high power transmitter and for an antenna with a very large effective area, or in other terms, having high gain.

The second problem is that of the very high angle accuracy required to achieve accurate location at long range, comparable to that achievable with groundbased systems operating at much shorter ranges. This last requirement too needs an antenna with a very narrow main lobe, and therefore very high gain. The dimensions of antennae with such performance are particularly large (from a few hundred to a few thousand times) compared to the radar operating wavelenght. This is set by operating and mission requirements for the primary radar, typically between 10 and 25 cm, and by International Civil Aviation rules for secondary radars, known as SSRs, set at 27.5 cm and 29.1 cm. Previous techniques attempted to solve, at least partly, these problems by means of physically large antennae, unfoldable in space in differing configurations. Mechanical and electrical aspects make the use of such antennae very critical and pose a limit to the maximum dimensions obtainable, fixed at few tens of meters per side, which does not provide complete satisfaction of the requirement.

This invention overcomes such limitations by means of a radically innovative concept; the invention is based upon a given number of modules orbiting around the Earth, called elementary satellites, each operating as an element of a phased array having very large dimensions. Each elementary satellite is provided with an antenna, a transponder and a communications subsystem interfacing the main satellite. The latter, which may be duplicated to increase the availability of the entire system, provides for coherent combination of the radar signals coming from the various elementary satellites, and this way an antenna with a radiating pattern having a very narrow main beam is obtained, comparable with that of a physical antenna with the same area occupied by the elementary satellites. This way a distributed array antenna is obtained, suitable for primary and secondary radars. The application, at least at the conceptual level, of the distributed array concept to the primary radar, with reference to the multistatic case, where transmitters and receivers are located at different points, is described in a recently published work:
[4] R.C. Hermiller, J.E. Belyea, P.G. Tomlinson: "Distributed Array Radar", IEEE Transactions on Aerospace & Electronic Systems Vol. AES-19 No. 6 November 1983, pp 831-839.

For application to Air Space Surveillance, monostatic operation is preferred (see [2] as an example) and a much larger than unity ratio (of the order of 100 : 1) between array area (i.e. the area over which the elementary satellites are distributed) and the sum of the areas of the array elements is required; under such conditions the concept of distributed array as shown in [4] is not conveniently applied, as it would give way to an excessive degradation of the undesired lobes of the resulting radiating pattern. Such lobes are mainly a consequence of the thinned array, i.e. because the ratio of the areas above is much greater than unity.

This invention eliminates such obstacle by relying upon the concept, well known to experts in array antennae and in systems using them, that the radiating pattern of an array is the product of an element factor (radiating pattern of the single element of the array) with an array factor (which is a function of the number and location of elements in the array alone). With previous state of the art, the array elements were very simple (such as dipoles) and their radiating pattern, almost constant within a wide angle, was not predictable. On the contrary, the elements used in this invention are complex antennae, which may also preferably be made by phased arrays, or at least having predictable radiating patterns. Such elementary antennae can direct the beam (the main lobe of their radiating pattern) in an assigned direction and: a) can generate adaptively very low gain values (so called nulls of the radiating pattern) in a number of assigned directions, about equal to the number of elementary radiators making up the antenna, preferably outside the main beam; or (6) may have very low gain values in all directions outside the main lobe.

To attenuate, or as commonly said, to suppress the undesired lobes within the main lobe of the elementary satellite antenna (and therefore of the element of the distributed array) this invention makes use of the concept of adaptive generation also at the distributed array level.

The adaptive generation of nulls concept and, more generally, adaptive shaping of an antenna radiating pattern, is described in many papers, among which the following:
[5] J.W.R. Griffths "Adaptive Array Processing A Tutorial" IEEE Procedings Vol. 130, Pts F and H, No 1, February 1985 pp. 3-10.

In this invention, the decision on which undesired lobes to suppress is taken by the main satellite processor on the basis of the following data:
a) Ratio between the level of each lobe and the level of the main lobe of the radiating diagram of the distributed array.
b) Reflectivity of the position of Earth surface regarded by each lobe (clutter map).
c) Geometry (range and dimension) of the radar resolution cells which regard the surface areas above.

Such information is contained in the main satellite control computer; that of item a) is measured periodically on the ground through measurement of one way radiating pattern, while items b) and c) are updated on board by a calibration device, consisting of two sections: a passive section utilising transmitters at known locations on the surface of the Earth and in the frequency bands in which the space borne radar system operates, providing accurate geometric calibration, and an active section, which measures the level of the radio echo (clutter signal) coming from various positions of the surface of the Earth.

A further datum which the central computer of the main satellite needs to generate the radiation pattern of the distributed array, is the geometry of the array itself. Such geometry is controlled, within tight tolerance, by a non rigid structure, preferably implemented by wire, which prevents the elementary satellites from dispersing due to effects of various origin (differences in orbit velocity and gravitational field, solar wind etc.). Suitable dampers limit structure oscillations. The elementary satellites are mechanically connected to such structure, which takes the shape of a flat network which is kept under tension through suitable satellites, called "pulling satellites", equal in number to the vertexes of the polygon encompassing the network. The main satellite is preferably sited on the axis perpendicular to the network plane and mechanically attached to it (preferably by wire); it may also operate as a self pulling satellite. The satellite pulling forces and their resulting momentum are null, or such as to make the required corrections to the orbit and/or system attitude.

Such control is centralised on the main satellite, where the entire system geometry is known at all times. Accurate satellite position measurement, by the main satellite, is obtained preferably by means of laser telemeter as described in the following.

Each elementary or pulling satellite has three laser retroreflectors, i.e. plates of a material which has a much higher reflecting capacity than the rest of the satellite surface. A laser telemeter, built according to the criteria well known to the experts and fitted to the main satellite, is aimed onto the retroreflectors so as to provide three extremely accurate range measurements, from which the on board computer can obtain position and attitude of each elementary satellite. Aiming of the laser telemeter is facilitated by using the angle of the elementary or pulling satellite and the main satellite, the latter obtained through the measurement of the angles of arrival of the communications subsystem carrier between satellites (inter-satellite link). In one of the preferred implementations of this invention, such subsystem is optical; the theory and applications of optical techniques and technologies for data transmission are illustrated in many works, among which the well known:
[6] R.M. Gagliardi, S. Karp: Optical Communications, J. Wiley & Sons, 1975.

However their use for radar signal transmission in space does not appear to be described in literature. The advantages of optical transmission, preferably by means of laser are:
- very high directivity
- extremely wide band (channel capacity)
- reduced weight and dimensions.

Within this invention, the inter-satellite link provides exchange of the following data (as a non limiting example):
- From main satellite to elementary satellite:
   a1) Waveform to be transmitter;
   a2) Commands for active beam forming;
   a3) Auxiliary signals and data (for synchronization, control & satellite functional check).
- From elementary satellite to main satellite:
   b1) Radar echo (and/or SSR reply)
   b2) Status and diagnostics data
- From main satellite to pulling satellite: data for orbit and attitude control.
- From pulling satellite to main satellite: status and diagnostic data.

A further implementation of this invention makes use of a conventional radio link, at the same radar frequencies or at shifted or submultiple frequencies, to transmit the waveform which (following multiplication or frequency shift) is amplified and phase shifted in the elementary satellites; the radio link may also be used in this configuration, for the data at a2) and a3). The secondary satellite radio receiver antenna has a sufficiently high directivity and front to back ratio to avoid that the radio transmission is affected by the radar signal transmitted when a sub multiple of the radar frequency is not used. This way, the combination of radar signals coming from elementary satellites is suitably implemented in radio frequency terms at antenna level.

Finally, the main satellite is equipped with a data link operating toward one or more ground stations for the exchange of data required for control and calibration and for transmission toward ground of the radar data, processed to the most suitable degree.

Such link may be implemented using the most conventional techniques. In the best preferred form, radar data is processed on board, so that the "track messages" are transmitted toward ground, including therefore position, speed and possible auxiliary information related to the targets observed.

A further implementation of this invention processes the radar signal and extracts information within the ground station; this does not modify the peculiar characteristics and operation of the invention if not for a greater capacity of the transmitting link toward ground, however compatible with the present state of the art.

This invention may be used for primary, secondary and both radar surveillance; furthermore it may be used for the selective type of secondary radar, known as SSR Mode S, which, further to the surveillance function, carries out that of data transmission toward and from surveilled aircraft, as well known to experts and users of radar surveillance and of air traffic control systems.

This invention, in one of its forms of implementation, makes use of the well known monopulse technique to improve angle measurement accuracy, especially under the condition of very low number of radar echoes or SSR replies coming from each target.

This situation is particularly true for the above mentioned SSR Mode S.

This invention will now be described with reference to one of its presently preferred forms of implementation, which is reported as a non limiting example and with reference to the figures and drawings attached, where:

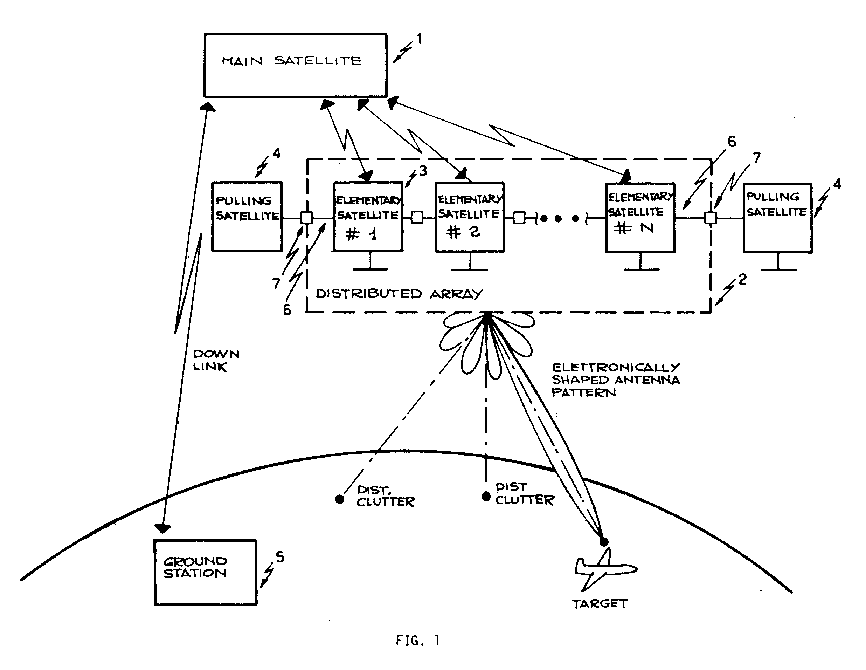

Figure 1 shows the Spaceborne Surveillance Radar in its preferred general functional configuration:
   1. Main satellite
   2. Distributed array
   3. Elementary satellite
   4. Pulling satellite
   5. Ground Station
   6. Segment of the connecting structure
   7. Damping element of the connecting structure.

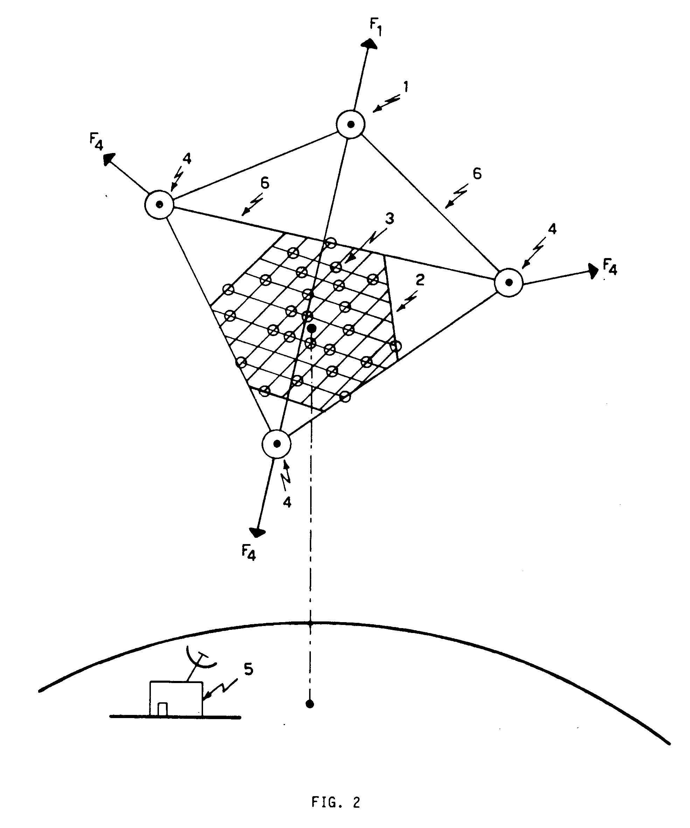

Figure 2 shows the same system in its preferred general configuration and in simplified perspective view.
Figure 3 shows the main satellite in its preferred general configuration:
   8. Receiver & Transmitter for the exchange of data with the ground station.
   9. Radar data extractor
   10. Processing of radar signal
   11. Decoder
   12. Primary power source and power supplies
   13. Central Computer
   14. Central Computer memory and stored maps
   15. Stabile Oscillator
   16. Measurement device of the angle coordinates of the elementary satellites and pulling satellites.
   17. Receiver of the inter satellite subsystem in the preferred optical configuration.
   18. Ion motors and other actuators for orbit and attitude control.
   19. Orbit and Attitude Control Unit
   20. Laser aiming device used for telemetry
   21. Laser telemeter
   22. Processor for antenna beamforming
   23. Processor for position and attitude of elementary and pulling satellites.
   24. Processor for orbit and attitude control of the whole system.
   25. Generator of system radiation pattern commands.
   26. Generator of controls and synchronization of elementary satellites (radar part).
   27. Coder of information to be transmitted
   28. Transmitter subsystem between satellites; in the preferred implementation, of the optical type.
   29. Processor for radar system management.
   30. Radar waveform generator.

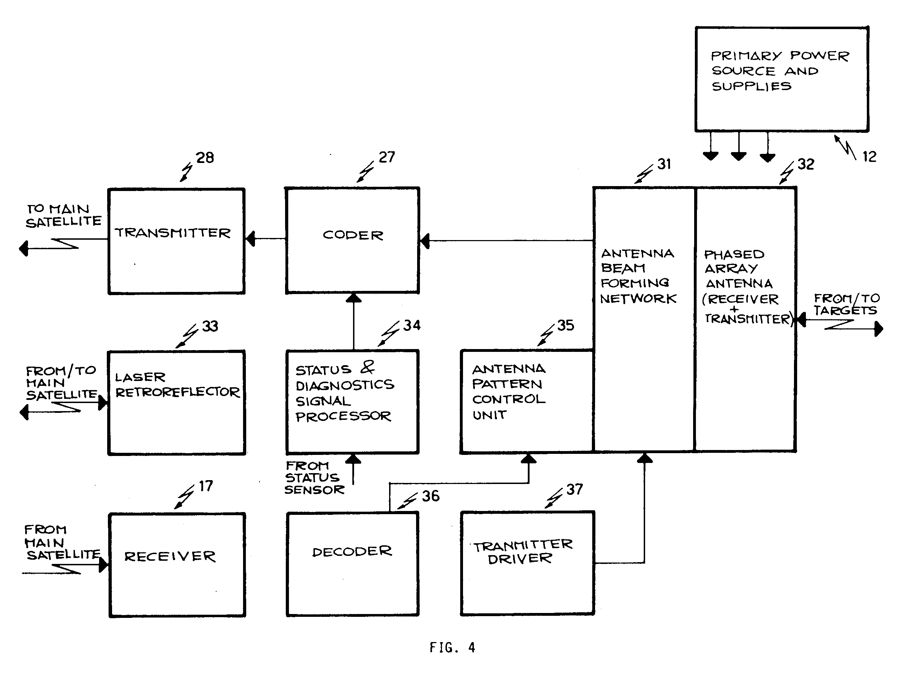

Figure 4 shows an elementary satellite in its preferred general configuration:
   31. Antenna pattern forming network
   32. Antenna, in the preferred phase array configuration including receiver and transmitter.
   33. Laser retroreflector
   34. Processor for status and diagnostic management for the various parts of the satellite.
   35. Antenna pattern control unit
   36. Received signal decoder
   37. Radar transmission driver.

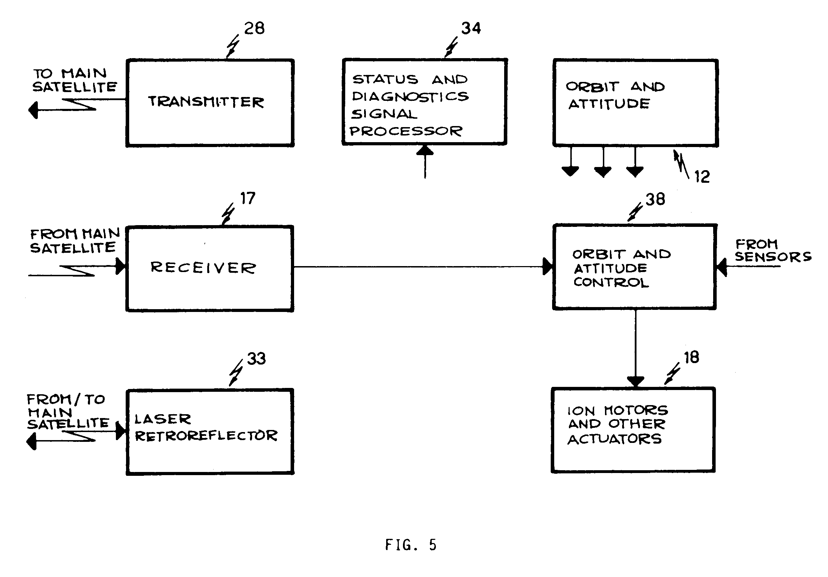

Figure 5 finally shows a pulling satellite in its preferred general configuration. Such satellite includes functional blocks identical to those present in the other satellites shown above, and in addition block (38) which is an orbit and attitude control which is managed by the main satellite.

This invention will now be described according to its general operating principle.

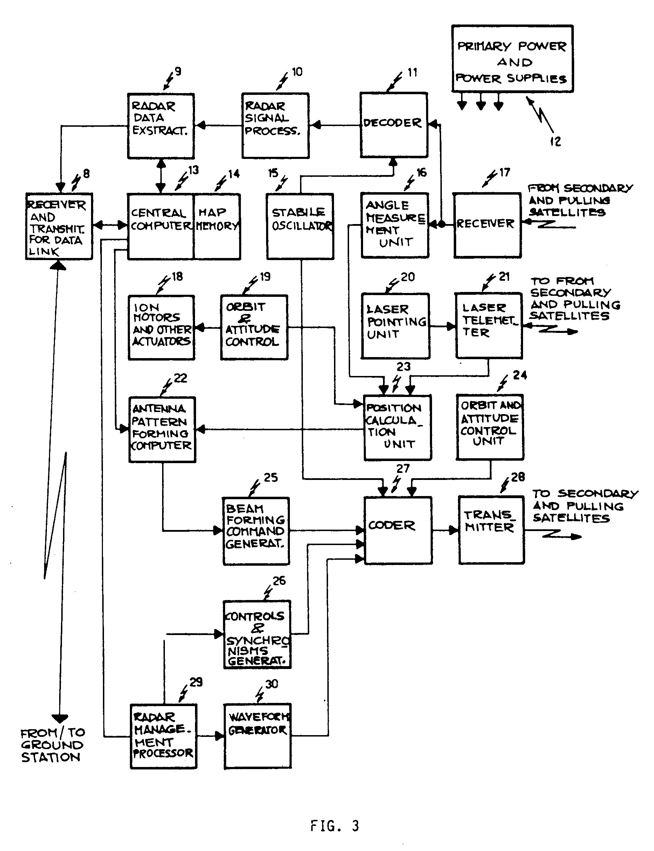

Depending upon the operating mode selected by the central computer (13) of the main satellite (1) (Figure 3), the management processor (29) of the radar system sends suitable commands to the controls and synchronisms generator (26) and to the transmitted waveform generator (30); controls, synchronisms and waveforms are coded and transmitted to all elementaray satellites, simultaneously. In parallel, as a function of surveillance requirements and of the related environment, the central computer (13) sets the aiming direction of the beam; furthermore as a function of data a), b) and c) described in the first part of this application, contained in memory (14), the central computer (13) establishes the strategy for the suppression of sidelobes.

Such data (pointing direction and suppression strategy) are sent to processor (22) which also receives precise information on elementary satellite position from processor (23). On the basis of such information, processor (22) calculates the coefficients required for beamforming, converted into suitable commands by generator (25), coded by coder (27) and sent to such elementary satellites by transmitter (28).

Receiver (17) of each elementary satellite (Figure 4) sends such commands, decoded by decoder (36), to another control unit (35) which completes processing and actuates commands acting upon the beamforming network (31) adapting the phased array in transmission and in reception.

During transmission, the waveform is decoded (36), suitably amplified by the so called transmitter driver (37) and sent to the transmitter section of the antenna (32).

Later on, the radar echo (and/or SSR reply) coming from the target is received by antenna (32) of each elementary satellite, where the radiation pattern is formed by network (31); the resulting radar signal is coded by coder (27) and transmitted to the main satellite by transmitter (28), which, in the preferred implementation, is of the optical type.

Such signal is received by receiver (17) (which is also of the optical type in the preferred form of implementation) (Figure 3) and sent to decoder (11) which uses the reference oscillation of the same stable oscillator (15) used for transmission coding in coder (27). The decoded radar signal is then transferred to processor (10) where noise filtering takes place (so called matched filtering or close approximation thereof), or that of different types of interference, firstly that of so called clutter undesired returns.

In the preferred form of implementation of this invention, within signal processing block (10) also the combination of signals coming from various elementary satellites takes place (spatial filtering, which synthesizes the distributed array).

Such combination, in another form of implementation, takes place at radiofrequency level at the antenna which forms part of the electronic receiver, (17) in Figure 3.

The data of interest to operation, relevant to targets, is obtained from the extractor (9) by means of further filtering of the radar information coming from processor (10) and later transferred to the ground station by means of subsystem (8).

Through the same subsystem (8) the information needed for beamforming and radar system management reaches the main computer (13); the latter, which includes type of waveform, controls and synchronisms, is processed by the management processor (29) which drives the controls and synchronisms generator (26) and waveform generator (30), the outputs of which are coded and transmitted to the elementary satellites by blocks (27) and (28).

Accurate knowledge of the distributed array geometry is obtained by means of a telemetry subsystem, which, in its preferred form of implementation, is of the laser type, where a laser telemeter (21) fitted on the main satellite is pointed onto suitable laser retroreflectors (33) fitted to each elementary and pulling satellite; pointing is aided by an angle measurement device (16) which uses the output of receivers (17) to measure the angle of arrival of the signal transmitted by the satellite and therefore also its angle position. The range measurements made by the laser telemeter (21) together with the angles provided by unit (16) are processed by computer (23) which determines the attitude of system satellites; such data is further processed to obtain the orbit and attitude corrections which are coded (27) and transmitted (28) to the pulling satellites, where they are received by receiver (17) and used by the orbit and attitude control system managed by the main satellite, block (38) which actuates them. The same position and attitude data is sent to the beam forming processor (22) where, as seen above, they are used to calculate the coefficients required for adaptive beamforming.

The distributed beamforming is calibrated exploiting the radar echoes of particular points on the Earth surface (known high reflectivity points) and using the replies sent by suitable SSR transponders set at well known positions. The difference between known position (stored in main computer (13)) and that measured by the radar system and transferred by extractor (9) to computer (13), is utilized by the same computer (13) to generate the correction commands, which are sent to the antenna beamforming processor (22). The difference between echo and reply amplitude and the related expected value may also be used, in a very similar manner, to check possible defocussing of the phased array and to perform the required corrections.

The main satellite has its own orbit and attitude control (19) with related actuators (18) as well as the orbit and attitude control processor of the entire system (24) which, by means of coder (27) and transmitter (28) sends control signals to each pulling satellite, where such signals are received by receiver (7) (Figure 5), which is optical, in the preferred implementation, and sent to the orbit and attitude control subsystem (38).

All satellites are equipped with their own electrical power supply subsystem, which includes a primary power source (12) (preferably implemented by means of solar panels and batteries) and supplies for all on board users.

Finally, the elementary and pulling satellites can transfer to the main satellite the information related to status and possible malfunctions (diagnostics), which are before hand processed and coded by a suitable processor (34).

## Claims

1. Radar system for primary surveillance of an airspace, comprising a plurality of elementary satellites each operating as an element of a distributed array and a ground station, characterised in that the radar system is adapted to also provide secondary surveillance of said airspace and in that the elementary satellites (3) are interconnected by a non-rigid structure (2) having dampers (7) and segments (6) kept under tension and in balance by pulling satellites (4) being equipped with attitude and orbit controls managed by a main satellite (1) which is adapted to receive radar signals for processing from the elementary satellites (3) and to transmit the processed data to the ground station (5).

2. Radar system according to claim 1, wherein the main satellite (1) is a pulling satellite.

3. Radar system according to claim 1 or 2, wherein radar signals coming from the elementary satellites (3) are combined coherently and adaptively, so as to synthesize a phased array, and wherein the coefficients of such combination are calculated by a processor in order to attenuate the sidelobes and maximize the signal to noise ratio.

4. Radar system according to claim 3, wherein the processor comprises a central computer (13), an antenna-beam forming processor (22) and a beam forming command generator (25).

5. Radar system according to any one of the preceding claims, wherein each elementary satellite (3) has an antenna (32) which is preferably a phased array, with coefficients determined on the basis of commands coming from the main satellite (1) with the purpose of attenuating sidelobes and maximizing signal to noise ratio.

6. Radar system according to claim 4 or 5, wherein an accurate measurement device of position and attitude of the elementary satellites (3) is arranged on the main satellite (1) and has the task of calculating said coefficients by means of an antenna beam forming processor (22) and transmitting them, following coding (27), by means of a transmitter (28), preferably of the optical type, to the elementary satellites (3).

7. Radar system according to any one of the preceding claims wherein a subsystem for the accurate measurement of the position of the pulling satellites (4) is fitted on board the main satellite (4) with the purpose of providing it with orbit and attitude control of the entire system by means of a suitable processor (24) and with transmission of commands and controls generated by the processor (24), by means of a coder (27) and a transmitter (28), towards the orbit and attitude control subsystem (38) of the pulling satellites (4) to drive suitable actuators (18) which include, preferably, ion motors.

8. Radar system according to claim 7, wherein the position measurement subsystem comprises a laser telemeter (21), an angle measurement unit (16) which helps to point the laser telemeter and a position computer (23) and also laser retroreflectors (33), preferably three in number, on each elementary (3) and pulling satellite (4).

9. Radar system according to any one of the preceding claims, wherein the exchange of signals and data between the main satellite (1) and the pulling and elementary satellites is performed optically by means of suitable transmitters (28), receivers (17), coders (27) and decoders (36).

10. Radar system according to any one of the preceding claims, wherein the exchange of signals and data between the main satellite (1) and the elementary and pulling ones is carried out by radio, and wherein the radar signals coming from targets are transmitted by the elementary satellites (3) to the main satellite (1), therafter combined by the receiver antenna (17) of the main satellite (1).

11. Radar system according to claim 10, wherein the transmission of radar signals from the elementary satellites (3) to the main satellite (1) is implemented at the same frequency at which the radar signals are received by the elementary satellites, or at a multiple or submultiple or at a shifted value of such frequency.

12. Radar system according to claim 10, characterised by the use of shift or multiplication/division of frequency within the receiver (17) and transmitter (28) of the elementary satellite (3).

13. Radar system according to any one of the preceding claims, wherein the central computer (13) of the main satellite (1) stores in its memory (14) the following data:
- ratio between sidelobes and peak of the distributed array,
- reflectivity of the surface of the earth covered by the array radiation pattern,
- geometry of the radar resolution cells of interest: such data is periodically updated by the main computer on the basis of measurements from the ground through receiver (8) and utilized to calculate beam forming coefficients.

14. Radar system according to any one of the preceding claims, wherein the combination of radar signals coming from the elementary satellites (3) is performed by suitable coefficients which synthesize the monopulse radiation patterns to improve the accuracy of the angle measurement.

15. Radar system according to any one of the preceding claims, wherein the radar signal processor (10) and data extractor (9) are housed in the ground station (5) rather than in the main satellite (1).

16. Radar system according to any one of the preceding claims, wherein the radar echoes of particular portions of the surface of the Earth and the SSR replies of particular transponders set at known sites are used to achieve continuous calibration through which the beam pointing errors and possible defocussing are corrected.

17. Radar system according to any one of the preceding claims, adapted to be used for primary/secondary radar surveillance and for defence or civil applications, including the selective secondary radar and its numeric data link.

18. Radar system according to any one of the preceding claims, adapted to operate from low or high or geostationary orbits.

19. Primary and/or secondary airspace surveillance radar, made up of a group of systems as described in any one of the preceding claims, each located in a suitable orbit so as to assure continuous surveillance of an area of interest or global coverage.

20. Radar system for airspace surveillance from space, comprising a group of systems according to claim 18, whereby the group is managed by a group main satellite, operating in the same manner as the system main satellite according to any one of the preceding claims.

## Patentansprüche

1. Radarsystem für die Primärüberwachung eines Luftraums, umfassend eine Gruppe von Einzelsatelliten, von denen jeder als ein Element eines örtlich verteilten Bereichs wirkt, sowie eine Bodenstation, dadurch gekennzeichnet, daß das Radarsystem auch eine Sekundärüberwachung des Luftraumes liefert und daß die Einzelsatelliten (3) miteinander über eine nicht starre Struktur (2) verbunden sind, die Dämpfungsglieder (7) und Systeme (6) aufweisen, welche unter Spannung und im Gleichgewicht gehalten werden durch Zugsatelliten (4), die mit Fluglage- und Bahnregelungssystem ausgerüstet sind, das von einem Hauptsatelliten (1) gesteuert wird, der von den Einzelsatelliten (3) Radarsignale für die Auswertung empfängt und die ausgewerteten Daten zur Bodenstation (5) sendet.

2. Radarsystem nach Anspruch 1, dadurch gekennzeichnet, daß der Hauptsatellit (1) ein Zugsatellit ist.

3. Radarsystem nach Anspruch 1 oder 2, dadurch gekennzeichnet, daß die von den Einzelsatelliten (3) kommenden Radarsignale kohärent und adaptiv so miteinander kombiniert werden, daß eine phasengesteuerte Anordnung synthetisiert wird, wobei die Koeffizienten dieser Kombination durch einen Prozessor so berechnet werden, daß die Nebenkeulen gedämpft und das Verhältnis Signal/Rauschen maximiert werden.

4. Radarsystem nach Anspruch 3, dadurch gekennzeichnet, daß der Prozessor einen Zentralcomputer (13), einen Prozessor (22) zur Bildung eines Antennenstrahls und einen Generator (25) für einen Strahlbildungsbefehl aufweist.

5. Radarsystem nach einem der vorhergehenden Ansprüche, dadurch gekennzeichnet, daß jeder Einzelsatellit (3) eine Antenne (32) hat, die vorzugsweise eine phasengesteuerte Anordnung mit Koeffizienten hat, die auf der Basis von Befehlen festgelegt werden, die vom Hauptsatelliten (1) kommen und die die Aufgabe haben, die Nebenkeulen zu dämpfen und das Verhältnis Signal/Rauschen zu maximieren.

6. Radarsystem nach Anspruch 4 oder 5, dadurch gekennzeichnet, daß auf dem Hauptsatelliten (1) eine Einrichtung zur genauen Bestimmung der Position und der Fluglage der Einzelsatelliten (3) vorgesehen ist, die die Aufgabe hat, die Koeffizienten mit Hilfe des Prozessors (22) für die Bildung eines Antennenstrahls zu ermitteln und diese nach einer Kodierung (27) mittels eines Senders (28), vorzugsweise eines optischen Senders, an die Einzelsatelliten (3) zu übertragen.

7. Radarsystem nach einem der vorhergehenden Ansprüche, dadurch gekennzeichnet, daß auf dem Hauptsatelliten (1) ein Subsystem zur genauen Bestimmung der Position der Zugsatelliten (4) angebracht ist, so daß dieser eine Fluglage- und Bahnregelungssteuerung für das gesamte System mittels Prozessor (24) durchführen und die von diesem erzeugten Befehle und Steuerdaten über einen Kodierer (27) und einen Sender (28) an das Subsystem (38) für die Steuerung der Fluglage und der Bahnregelung der Zugsatelliten übertragen kann, das geeignete Stellorgane (18) steuert, die vorzugsweise Ionenmotoren aufweisen.

8. Radarsystem nach Anspruch 7, dadurch gekennzeichnet, daß das Subsystem für die Positionsbestimmung einen Laser-Entfernungsmesser (21), eine Winkelmeßeinheit (16) zur Unterstützung der Ausrichtung des Laser-Entfernungsmessers (21), einen Positions-Computer (23) sowie vorzugsweise drei Laser-Retroreflektoren (33) auf jedem Einzelsatelliten (3) und Zugsatelliten (4) aufweisen.

9. Radarsystem nach einem der vorhergehenden Ansprüche, dadurch gekennzeichnet, daß der Signal- und Datenaustausch zwischen dem Hauptsatelliten (1) und den Zugsatelliten sowie Einzelsatelliten optisch erfolgt mittels geeigneter Sender (28), Empfänger (17), Kodierer (27) und Dekodierer (36).

10. Radarsystem nach einem der vorhergehenden Ansprüche, dadurch gekennzeichnet, daß der Signal- und Datenaustausch zwischen dem Hauptsatelliten (1) und den Zugsatelliten sowie Einzelsatelliten über Funk erfolgt, wobei die von den Zielen kommenden Radarsignale von den Einzelsatelliten (3) zum Hauptsatelliten (1) übertragen und anschließend von der Empfangsantenne (17) des Hauptsatelliten (1) kombiniert werden.

11. Radarsystem nach Anspruch 10, dadurch gekennzeichnet, daß die Übertragung der Radarsignale von den Einzelsatelliten (3) auf den Hauptsatelliten (1) mit derselben Frequenz, mit der auch die Radarsignale von den Einzelsatelliten empfangen werden, oder mit einem Vielfachen oder einem Teilvielfachen oder einem phasenverschobenen Wert dieser Frequenz erfolgt.

12. Radarsystem nach Anspruch 10, dadurch gekennzeichnet, daß die Frequenz in dem Empfänger (17) und in dem Sender (28) des Einzelsatelliten (3) phasenverschoben oder multipliziert/dividiert wird.

13. Radarsystem nach einem der vorhergehenden Ansprüche, dadurch gekennzeichnet, daß der Zentralcomputer (13) des Hauptsatelliten (1) in seinem Speicher (14) die folgenden Daten speichert:
- Verhältnis zwischen Nebenkeulen und Spitzen des örtlich verteilten Bereichs,
- Reflexionsvermögen der Erdoberfläche, die von der Bereichs-Strahlungscharakteristik betroffen ist,
- Geometrie der betroffenen Radar-Auflösungszellen,
wobei diese Daten von dem Hauptrechner periodisch aktualisiert werden auf der Basis von am Boden mittels des Empfängers (8) durchgeführten Messungen, die für die Berechnung der Koeffizienten zur Strahlbildung verwendet werden.

14. Radarsystem nach einem der vorhergehenden Ansprüche, dadurch gekennzeichnet, daß die Kombination der von den Einzelsatelliten (3) kommenden Radarsignale mittels geeigneter Koeffizienten erfolgt, welche die Monopuls-Strahlungscharakteristiken synthetisieren und dadurch die Winkelmeßgenauigkeit erhöhen.

15. Radarsystem nach einem der vorhergehenden Ansprüche, dadurch gekennzeichnet, daß der Radarsignal-Prozessor (10) und der Datenauswerter (9) nicht im Hauptsatelliten (1), sondern in der Bodenstation (5) untergebracht sind.

16. Radarsystem nach einem der vorhergehenden Ansprüche, dadurch gekennzeichnet, daß die Radarechos von einzelnen Oberflächenbereichen der Erde und die SSR (Sekundärüberwachungsradar)-Antworten besonderer Antwortgeräte, die an bekannten Stellen aufgestellt sind, dazu benutzt werden, eine kontinuierliche Eichung vorzunehmen, mittels der die Strahlzielungsfehler und mögliche Fokusabweichungen korrigiert werden.

17. Radarsystem nach einem der vorhergehenden Ansprüche, gekennzeichnet durch die Anwendung für Primär- und/oder Sekundär-Radarüberwachung, für die Verteidigung oder für zivile Zwecke einschließlich selektives Sekundärradar und dessen numerische Datenübertragungen.

18. Radarsystem nach einem der vorhergehenden Ansprüche, dadurch gekennzeichnet, daß dieses von tiefen oder hohen oder geostationären Umlaufbahnen betrieben wird.

19. Primär- und/oder Sekundärradar für die Luftraumüberwachung, bestehend aus einer Gruppe von Radarsystemen nach einem der vorhergehenden Ansprüche, von denen jede in einer geeigneten Umlaufbahn ist derart, daß eine kontinuierliche Überwachung eines interessierenden Bereichs oder eine globale Abdeckung gewährleistet ist.

20. Radarsystem für die Luftraumüberwachung aus dem Raum mit einer Gruppe von Radarsystemen nach Anspruch 19, dadurch gekennzeichnet, daß die Gruppe von einem Gruppen-Hauptsatelliten gesteuert wird, der in derselben Weise wie der System-Hauptsatellit nach einem der vorhergehenden Ansprüche arbeitet.

## Revendications

1. Système radar pour la surveillance primaire d'un espace aérien, comprenant une pluralité de satellites élémentaires fonctionnant chacun comme un élément d'un réseau distribué et une station au sol, caractérisé en ce que le système radar est adapté pour réaliser également une surveillance secondaire dudit espace aérien et en ce que les satellites élémentaires (3) sont interconnectés par une structure non rigide (2) ayant des amortisseurs (7) et des segments (6) maintenus sous tension et en équilibre par des satellites de traction (4) étant équipés avec des commandes d'attitude et d'orbite pilotées par un satellite principal (1) qui est adapté pour recevoir des signaux radar à traiter provenant des satellites élémentaires (3) et pour transmettre les données traitées à la station au sol (5).

2. Système radar selon la revendication 1, dans lequel le satellite principal (1) est un satellite de traction.

3. Système radar selon l'une des revendications 1 ou 2, dans lequel les signaux radar provenant des satellites élémentaires (3) sont combinés de façon cohérente et adaptative, de façon à générer un réseau piloté en phase, et dans lequel les coefficients d'une telle combinaison sont calculés par un processeur de façon à atténuer les lobes latéraux et à maximiser le rapport signal sur bruit.

4. Système radar selon la revendication 3, dans lequel le processeur comprend un ordinateur central (13), un processeur (22) de formation de faisceau d'antenne et un générateur (25) de commande de formation de faisceau.

5. Système radar selon l'une quelconque des revendications précédentes, dans lequel chaque satellite élémentaire (3) comprend une antenne (32) oui est de préférence un réseau piloté en phase, avec des coefficients déterminés sur la base des commandes provenant du satellite principal (1) dans le but d'atténuer les lobes latéraux et de maximiser le rapport signal sur bruit.

6. Système radar selon l'une des revendications 4 ou 5, dans lequel un dispositif de mesure précis de position et d'attitude des satellites élémentaires (3) est prévu sur le satellite principal (1) et réalise la tâche de calculer lesdits coefficients au moyen d'un processeur (22) de formation de faisceau d'antenne et de les transmettre, après codage (27), par le moyen d'un transmetteur (28), de préférence de type optique, aux satellites élémentaires (3).

7. Système radar selon l'une quelconque des revendications précédentes dans lequel un sous-système pour la mesure précise de la position des satellites de traction (4) est installé à bord du satellite principal (1), dans le but de lui fournir une commande d' orbite et d'attitude de l'ensemble du système au moyen d'un processeur (24) approprié et une transmission de commandes et de contrôles générés par le processeur (24), au moyen d'un codeur (27) et d'un transmetteur (28), vers le sous-système (38) de commande d'orbite et d'attitude des satellites de traction (4) pour piloter des actionneurs appropriés (18) qui comprennent, de préférence, des moteurs ioniques.

8. Système radar selon la revendication 7, dans lequel le sous-système de mesure de position comprend un télémètre laser (21), une unité de mesure d'angle (16) qui aide à pointer le télémètre laser et un ordinateur de position (23) et également des rétroréflecteurs laser (33), de préférence au nombre de trois, sur chaque satellite élémentaire (3) et satellite de traction (4).

9. Système radar selon l'une quelconque des revendications précédentes, dans lequel l'échange des signaux et des données entre le satellite principal (1) et les satellites de traction et élémentaires est réalisé optiquement au moyen de transmetteurs (28), de receveurs (17), de codeurs (27) et de décodeurs (36) appropriés.

10. Système radar selon l'une quelconque des revendications précédentes, dans lequel l'échange des signaux et des données entre le satellite principal (1) et les satellites élémentaires et de traction est réalisé par radio, et dans lequel les signaux radar provenant des cibles sont transmis par les satellites élémentaires (3) au satellite principal (1), puis combinés par l'antenne de réception (17) du satellite principal (1).

11. Système radar selon la revendication 10, dans lequel la transmission des signaux radar depuis les satellites élémentaires (3) jusqu'au satellite principal (1) est réalisée à la même fréquence que celle à laquelle les signaux radar sont reçus par les satellites élémentaires, ou à un multiple ou un sous-multiple ou à une valeur décalée de ladite fréquence.

12. Système radar selon la revendication 10, caractérisé par l'utilisation d'un décalage ou d'une multiplication/division de fréquence à l'intérieur du récepteur (17) et du transmetteur (28) du satellite élémentaire (3).

13. Système radar selon l'une quelconque des revendications précédentes, dans lequel l'ordinateur central (13) du satellite principal (1) enregistre dans sa mémoire (14) les données suivantes :
- le rapport entre les lobes latéraux et le pic du réseau distribué,
- le pouvoir de réflexion de la surface de la terre couverte par le réseau de radiations,
- la géométrie des cellules de résolution radar concernées : une telle donnée est périodiquement mise à jour par l'ordinateur principal sur la base de mesures provenant du sol par l'intermédiaire du récepteur (8) et utilisée pour calculer des coefficients de formation de faisceau.

14. Système radar selon l'une quelconque des revendications précédentes, dans lequel la combinaison des signaux radar provenant des satellites élémentaires (3) est réalisée par des coefficients appropriés qui synthétisent des réseaux de radiation monoimpulsion pour augmenter la précision de la mesure d'angle.

15. Système radar selon l'une quelconque des revendications précédentes, dans lequel le processeur de signal radar (10) et l'extracteur de données (9) sont logés dans la station au sol (5) plutôt que dans le satellite principal (1).

16. Système radar selon l'une quelconque des revendications précédentes, dans lequel on utilise les échos radar de portions particulières de la surface de la terre et les réponses SSR de répéteurs particuliers dans des endroits connus pour réaliser un calibrage continu par lequel sont corrigées les erreurs de pointage de faisceau et l'éventuelle défocalisation de faisceau.

17. Système radar selon l'une quelconque des revendications précédentes, adapté pour être utilisé pour la surveillance radar primaire/secondaire et pour les applications de défense ou civiles, incluant le radar secondaire sélectif et sa liaison par données numériques.

18. Système radar selon l'une quelconque des revendications précédentes, adapté pour fonctionner sur des orbites basses, ou hautes ou géostationnaires.

19. Radar de surveillance d'espace aérien primaire et/ou secondaire, constitué d'un groupe de systèmes tels que décrits dans l'une quelconque des revendications précédentes, logés chacun sur une orbite appropriée de façon à assurer une surveillance continue couvrant une zone d'intérêt ou à couverture globale.

20. Système radar pour la surveillance de l'espace aérien à partir de l'espace, comprenant un groupe de systèmes selon la revendication 18, par lequel le groupe est piloté par un satellite principal de groupe, fonctionnant de la même façon que le satellite principal de système selon l'une quelconque des revendications précédentes.
